# NEUE EUROPÄISCHE PATENTSCHRIFT

(11) **EP 1 890 954 B2**
(45) Veröffentlichungstag und Bekanntmachung des Hinweises auf die Entscheidung über den Einspruch: **12.10.2016**
(45) Hinweis auf die Patenterteilung: 04.03.2009
(21) Anmeldenummer: 07724976.1
(22) Anmeldetag: 08.05.2007
(51) Int. Cl.: B65G 59/02

(54) **VERFAHREN UND VORRICHTUNG ZUM ENTPALLETIEREN VON GESTAPELTEN GEBINDEN**
METHOD AND DEVICE FOR DEPALLETISING STACKED BUNDLES
PROCÉDÉ ET DISPOSITIF PERMETTANT DE PRÉLEVER DES EMBALLAGES SECONDAIRES EMPILÉS SUR UNE PALETTE

(30) Priorität: 12.05.2006 DE 102006022155
(43) Veröffentlichungstag der Anmeldung: 27.02.2008
(73) Patentinhaber: KUKA Roboter GmbH, 86165 Augsburg (DE)
(72) Erfinder: BAUMANN, Michael, 85774 Unterföhring (DE); FELLNER, Herbert, 83059 Korbermoor (DE)
(74) Vertreter: Schlotter, Alexander Carolus Paul
(86) Internationale Anmeldenummer: PCT/EP2007/004052
(87) Internationale Veröffentlichungsnummer: WO 2007/131668

(56) Entgegenhaltungen:
- EP-A1- 0 462 518
- EP-A1- 0 627 373
- DE-A1- 3 718 601
- DE-A1- 3 915 139
- DE-A1- 19 700 911
- FR-A1- 2 754 803
- US-A- 3 917 082
- US-A- 4 453 874
- US-A- 5 265 712
- US-A1- 2002 154 986

## Beschreibung

Die Erfindung betrifft ein Verfahren zum Entpalletieren von gestapelten Gebinden, wobei Gebinde reibschlüssig angehoben und durch mindestens einen Tragboden unterfahren werden, sowie eine Vorrichtung zum Entpalletieren von gestapelten Gebinden, mit mindestens einer Walze zum Anheben der Gebinde und mit einem Tragboden.

Die Erfindung bezieht sich insbesondere auf das Depalletieren von auf einer Palette gestapelten Gebinden.

Auf einer Palette werden üblicherweise Einzelwaren oder gebundene Warengebinde in mehreren Lagen aufgestapelt und damit für einen Transport zusammengestellt. Bei sortenreinem Palletieren werden gleiche Waren, wie beispielsweise Getränketräger auf die Palette gestapelt. Bei gemischtem Palletieren werden unterschiedliche Waren oder Warengebinde auf eine einzelne Palette zusammengestellt. Man spricht dabei auch von gemischtem Kommissionieren. Eine weit verbreitete Anwendung ist das Zusammenstellen einer gemischten Palette von Waren aufgrund einer Bestellung eines Einzelhandelsgeschäfts beim Großhändler. Die vom Einzelhändler bestellten Waren werden aus einem Lager des Großhändlers zusammengestellt. Dabei werden die gewünschten Waren von sortenreinen Paletten abgenommen und auf eine Lieferpalette nach Kundenbestellung individuell aufgebaut. Die gemischt kommissionierte Palette wird dann an den Besteller, d.h. den Einzelhändler ausgeliefert.

Die US 4,453,874 zeigt eine gattungsgemäße Vorrichtung mit einem Greifer, an dessen vorderen, freien Ende drehbare Rollen angebracht sind. Die Rollen dienen dazu, mittels reibschlüssigem Kontakt zu einer Seitenfläche der aufzunehmenden Waren diese einseitig anzuheben, so dass sie auf einen Tragboden des Greifers aufgeladen werden können, der hierzu unter die Waren verfahren kann. Alternativ kann ein Förderband am Greifer vorgesehen sein, mit dem die Waren auf diesen transportiert werden. Die Rollen können mit einem reibungserhöhenden Betrag oder einer Beschichtung versehen sein, beispielsweise können sie gummiert ausgebildet sein. Die aufgenommenen Warenpakete können anschließend in umgekehrter Reihenfolge wieder auf eine andere Palette abgesetzt werden. Solche Greifer sind im allgemeinen fest in einer Anlage installiert oder durch eine Portalanlage mobil geführt.

Nachteilig ist, dass nur ein einseitiges Angreifen an den Waren möglich ist, damit ein Gegenhalter notwendig ist und, da beim Anheben die Waren gekippt werden und dabei der Abstand zwischen Gegenhalter und Anheberollen sich vergrößert, entweder der Gegenhalter oder die Anheberollen nachgiebig angeordnet sein müssen, wobei eine schwierige Abstimmung zwischen elastischer Nachgebekraft und Reibungskoeffizient der Rollen vorzunehmen ist.

Die DE 37 18 601 A1 zeigt ein Depalletierwerkzeug, das an einem Gelenkroboter angebracht ist. Das Werkzeug weist starre schaufelartige Aufnahmezungen auf, die die Warenpakete untergreifen und anheben können. Die US 2002/0154986 A1 weist eine Hebeplatte mit sehr geringer Höhe auf, die zwischen Lagen von Waren geschoben werden kann, die obere Lage dabei anhebt, so dass eine stärkere und stabilere Aufnahmeplatte unter die Warenpakete geschoben werden kann. Auch dieses Werkzeug kann an einem Roboter befestigt sein.

Ferner weisen aus dem Stand der Technik bekannte Depalletierwerkzeuge den Nachteil auf, dass der Depalletiervorgang durch ein Vorhandensein von lose auf der Oberseite einer Gebindeeinheit angeordneten Objekten, wie beispielsweise Deckel oder Decklagen in verschiedensten Ausführungen oder Materialien, empfindlichst gestört bzw. behindert werden kann. So kann beispielsweise ein Verrutschen oder Verkanten derartiger Objekte während eines Entladevorgangs zu einem vollständigen Betriebsausfall eines bekannten Depalletierwerkzeugs mit einem damit verbundenen erheblichen Zeit- und Reparaturaufwand führen.

Aus der DE 197 00 911 A1 ist eine Anordnung zur Depalletierung und Palettierung bekannt, bei der mehrere Gebindelagen gemeinsam beidseitig von Hubgabeln unterfahren und durch diese angehoben werden. Durch separate Druckluftkissen werden die mehereren Gebindelagen reibschlüssig angehoben, so dass sie von den Hubgabeln unterfahren werden können und dabei und beim Anheben stabilisiert werden.

Aus dem US-Patent 5,265,712 ist eine Vorrichtung zum Aufnehmen von isbesondere schweren Gebinden bekannt. Sie weist ein unteres Förderband mit einer frontseitigen Rolle sowie ein Hilfselement mit einer weiteren Rolle auf. Diese prägt eine horizontale Kraft an einer Kante der Oberseite des Gebindes auf, die zusammen mit einer Reibkraft, die durch die frontseitige Rolle des unteren Förderbandes ein Drehmoment ergibt, welches das Gebinde kippt, so dass es von dem unteren Förderband weggefördert werden kann.

Der Erfindung liegt die Aufgabe zugrunde, ausgehend von dem eingangs genannten Stand der Technik unter Vermeidung der genannten Nachteile Produkte in verschiedensten Verpackungsformen zuverlässig und sicher zu depalettieren.

Erfindungsgemäß wird die genannte Aufgabe durch ein Verfahren mit den Merkmalen des Anspruchs 1 bzw. eine Vorrichtung mit den Merkmalen des Anspruchs 3 gelöst. Demgemäß sieht eine gattungsgemäße Vorrichtung zur Lösung der genannten Aufgabe mindestens zwei einander gegenüberliegende Walzen vor.

Durch die Erfindung wird ein sicheres und zuverlässiges Anheben von zum Entnehmen gestapelter Gebinden ermöglicht, indem an zumindest zwei gegenüberliegenden Seiten der Gebinde reibschlüssig angegriffen wird. Hierdurch werden die Gebinde zum einen in Parallelausrichtung zu den Gebindelagen, insbesondere senkrecht angehoben, zum anderen wird dadurch, dass an zwei gegenüberliegenden Seiten reibschlüssig angegriffen wird, eine höhere Zuverlässigkeit erreicht. Darüber hinaus wird weiter gegenüber dem eingangs genannten Stand der Technik eine schwierige Abstimmung zwischen Reibungskoeffizient der Hebeelemente, wie eben Walzen und Horizontale diese gegen die Gebinde drückende nachgiebiger oder elastischer Kraft vermieden, da die Hebelelemente mit einer solchen Maximalkraft gegen die Gebinde gedrückt werden können, die so groß ist, dass sie die Gebinde lediglich nicht beschädigt.

Gemäß dem erfindungsgemäßen Verfahren ist vorgesehen, dass die Gebinde mittels Walzen angehoben werden, die sich hierzu drehen, wobei dann die -angehobenen - Gebinde von mindestens zwei Seiten mit jeweils einem Tragbodenteil unterfahren werden. Das Unterfahren erfolgt dabei von zwei gegenüberliegenden Seiten.

Demgemäß sieht eine erfindungsgemäße Vorrichtung vor, dass der Tragboden mindestens zwei gegeneinander verfahrbare Tragbodenteile aufweist. Hierdurch wird zum einen eine symmetrische Ausgestaltung der erfindungsgemäßen Vorrichtung erreicht Damit ist diese nicht einseitig übermäßig ausladend. Darüber hinaus wird hierdurch ebenfalls das Aufnehmen und Greifen der Gebinde verbessert und mit höherer Sicherheit versehen.

Bei der erfindungsgemäßen Vorrichtung ist vorgesehen, dass die Walzen, durch mindestens einen Walzenantriebsmotor antreibbar sind, wobei insbesondere die Walzen über Riemen vom mindestens einem Walzenmotor her antreibbar sind.

Zum Bewegen der Platten kann in bevorzugter Ausgestaltung vorgesehen sein, dass die Tragbodenteile über Mitnehmer verschiebbar sind, wobei insbesondere wiederum die Tragbodenteile mittels Antriebsriemen, ggf. über die Mitnehmer verschiebbar sind. In Weiterbildung kann dabei insbesondere vorgesehen sein, dass die Tragbodenteile über mindestens eine Verteilerwelle verschiebbar sind, wobei weiterhin die Verteilerwelle von mindestens einem Motor über mindestens einen Zahnriemen antreibbar ist.

Zur Positionierung der aufgenommenen Gebinde sieht die Erfindung in einer Weiterbildung einen festen Anschlag und einen gegenüber diesem beweglichen Anschlag zur Positionierung der Gebinde vor, wobei insbesondere der bewegliche Anschlag mittels mindestens eines Zylinders, vorzugsweise als Druckluftzylinder, verschiebbar ist.

Um die Gebinde auch in Richtung senkrecht zu den Anschlägen aufzunehmen, ist in bevorzugter Ausgestaltung eine Zentriereinrichtung vorgesehen, die insbesondere derart ausgestaltet ist, dass mindestens eine parallel zur Erstrekkungsrichtung von zwei Walzen verschiebbaren Schieberplatte zur Zentrierung der Gebinde vorgesehen ist, wobei weiterhin zwei gegeneinander verschiebbare Schiebeplatten vorgesehen sein können. Eine konkrete Ausgestaltung sieht dabei vor, dass die Schiebeplatten durch mindestens einen Zentriermotor, vorzugsweise über Zahnriemen verschiebbar sind, wobei insbesondere die Schiebplatten synchron bewegbar sind. Die erfindungsgemäße Vorrichtung weist, wie dies aus dem Stand der Technik an sich bekannt ist, eine Anschlusskupplung zur Verbindung mit einem Roboter auf.

Um weiterhin eine erhöhte Betriebssicherheit während des Depalletiervorgangs zu erreichen wird vorgeschlagen, dass mindestens ein Niederhalter auf die Oberseite der Gebinde einwirkt. Erfindungsgemäß kann dadurch zuverlässig ein Verrutschen bzw. Verkanten von auf der Oberseite der Gebindeeinheit angeordneter, jedoch nicht an der Gebindeeinheit fixierter Objekte vermieden werden. Dabei kann es sich insbesondere um lose positionierte Deckel oder Decklagen in unterschiedlichen Ausführungsformen oder Materialien handeln, wie sie üblicherweise zu Schutzzwecken auf der Oberfläche von Gebinden angeordnet werden.

In vorrichtungstechnischer Hinsicht sieht die Erfindung zur Lösung dieses Problems vor, dass ein Niederhalter auf der Oberseite der Gebinde angeordnet ist. Bevorzugt ist ein derartiger Niederhalter im Wesentlichen plattenförmig ausgebildet. Dadurch kann zum einen erreicht werden, dass der Niederhalter die gesamte Oberseite eines Gebindes abdeckt, andererseits einfach positionierbar bleibt.

In bevorzugter Ausführung ist ein solcher Niederhalter weiterhin derart flexibel ausgebildet, dass er im Wesentlichen an die Oberflächenform der Gebinde anpassbar ist. Derart kann eine besonders hohe Betriebssicherheit auch im Falle einzelner auf bestimmten Teilbereichen der Oberfläche angeordneter Objekte erzielt werden, da somit erfindungsgemäß eine Sicherung im Wesentlichen entlang der gesamten Gebindeoberseite gewährleistet ist. Dabei kann beispielsweise vorgesehen sein, dass der Niederhalter aus kettenförmigem Material, insbesondere Scharnierbandketten aus Kunststoff oder Metall gebildet ist. Ebenso kann der Niederhalter aus teppichförmig geflochtenem Material, insbesondere Draht oder Stoff, gebildet sein. Eine derartige Materialwahl ermöglich erfindungsgemäß ein Anpassen des Niederhalters an die jeweiligen Konturen einer jeweiligen Gebindelage.

Alternativ kann der Niederhalter auch starr ausgebildet sein. Derart kann eine besonders hohe Anpresskraft des Niederhalters auf die Oberfläche des Gebindes erzielt werden. Weitere Ausführungsformen des Niederhalters sehen eine geradflächige oder durchhängende Ausbildung vor.

Zum Erreichen eines besonders einfachen Positionieren des Niederhalters wird vorgeschlagen, dass der Niederhalter von einer oberen Position in eine unter Position vertikal verfahrbar ist. Bevorzugt entspricht die untere Position dabei derjenigen Position, in welcher der Niederhalter mit der Oberfläche der Gebindeoberseite in reibschlüssigen Kontakt tritt. Derart ist auch ein bedarfsweiser Einsatz des Niederhalters möglich. Sollte der Niederhalter nicht benötigt werden, ist vorgesehen, dass er bei der Durchführung des erfindungsgemäßen Verfahrens in seiner oberen Position verharrt.

In bevorzugter Ausführung ist der Niederhalter stufenlos verfahrbar, insbesondere die Verfahrhöhe bzw. -weite stufenlos einstellbar. Bevorzugt wird der Niederhalter dabei von Lineareinheiten geführt, wodurch ein bedarfsweise präzises Verfahren ermöglicht wird. Insbesondere kann vorgesehen sein, dass die lineare Führung des Niederhalters an dessen jeweiligen Seiten bzw. Ecken, insbesondere vierseitig, erfolgt. Eine präzise schaltbare Ausführung eines Niederhalters sieht dabei vor, dass dieser pneumatisch und/oder motorisch verfahrbar ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt:
- Fig. 1: eine perspektivische Darstellung einer erfindungsgemäßen Vorrichtung an einem Roboter beim Angreifen an einem Gebindestapel;

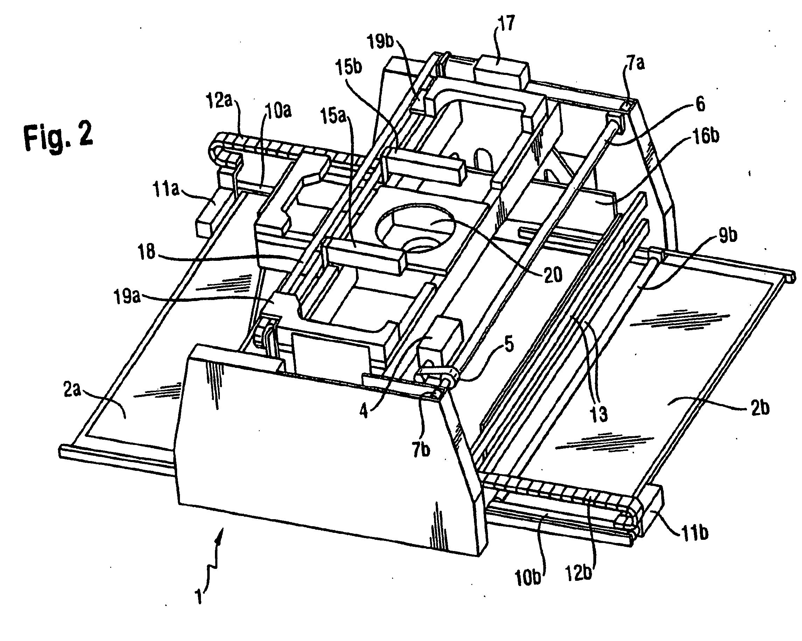

- Fig. 2: die bevorzugte Ausführungsform der erfindungsgemäßen Vorrichtung in perspektivischer Darstellung schräg von oben;

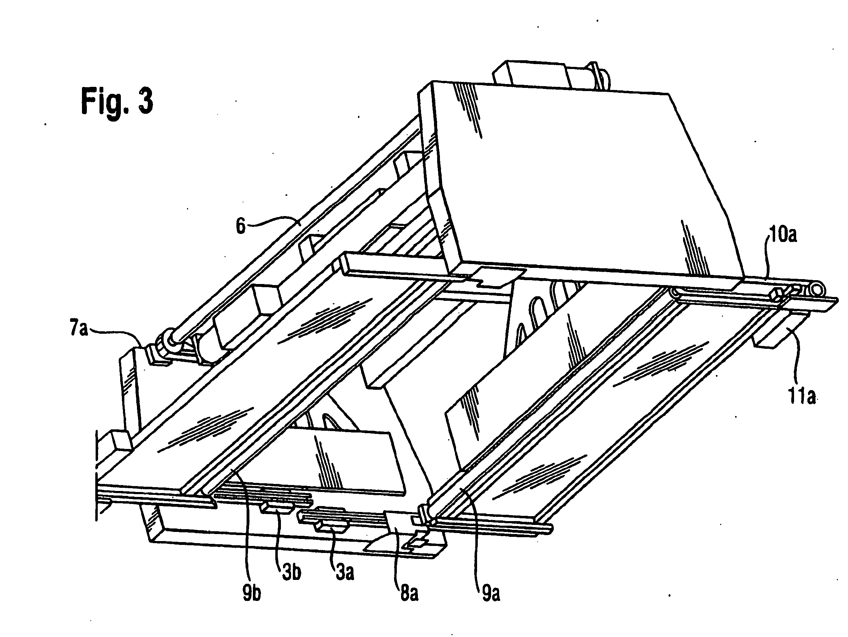

- Fig. 3: die erfindungsgemäße Ausgestaltung der erfindungsgemäßen Vorrichtung in perspektivischer Darstellung schräg von unten in geöffnetem Zustand;

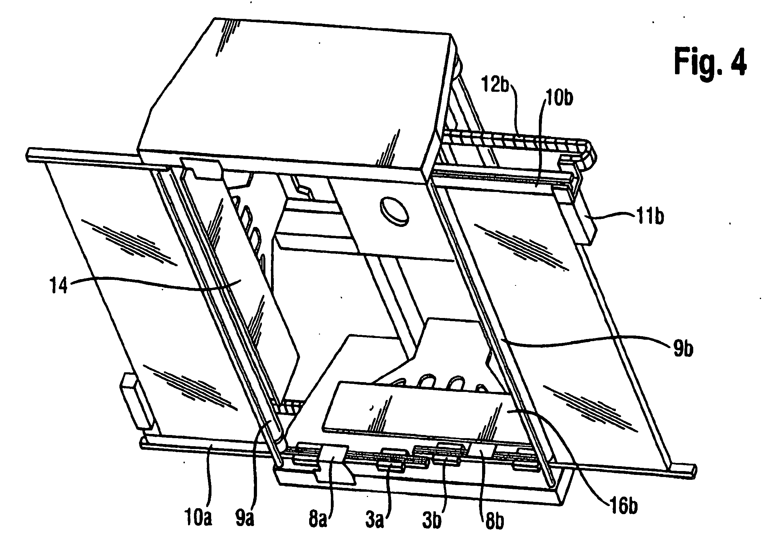

- Fig. 4: eine weitere perspektivische Darstellung der erfindungsgemäßen Vorrichtung in geöffnetem Zustand;
- Fig. 5: eine perspektivische Darstellung der bevorzugten Ausführungsform der erfindungsgemäßen Vorrichtung in geschlossenem Zustand, schräg von oben;
- Fig. 6: eine weitere perspektivische Darstellung der erfindungsgemäßen Vorrichtung in geschlossenem Zustand, schräg von unten;
- Fig. 7: einen Vertikalschnitt durch die erfindungsgemäße Vorrichtung in geschlossenem Zustand;
- Fig. 8: einen Vertikalschnitt durch die erfindungsgemäße Vorrichtung in geöffnetem Zustand;
- Fig. 9: eine perspektivische Darstellung einer erfindungsgemäßen Vorrichtung in einer Seitenansicht, wobei Teile des Grundrahmens entfernt sind, so dass der Innenbereich mit einem erfindungsgemäßen Niederhalter einsehbar ist, von welchem die Oberfläche eines Gebindestapels abgedeckt wird;

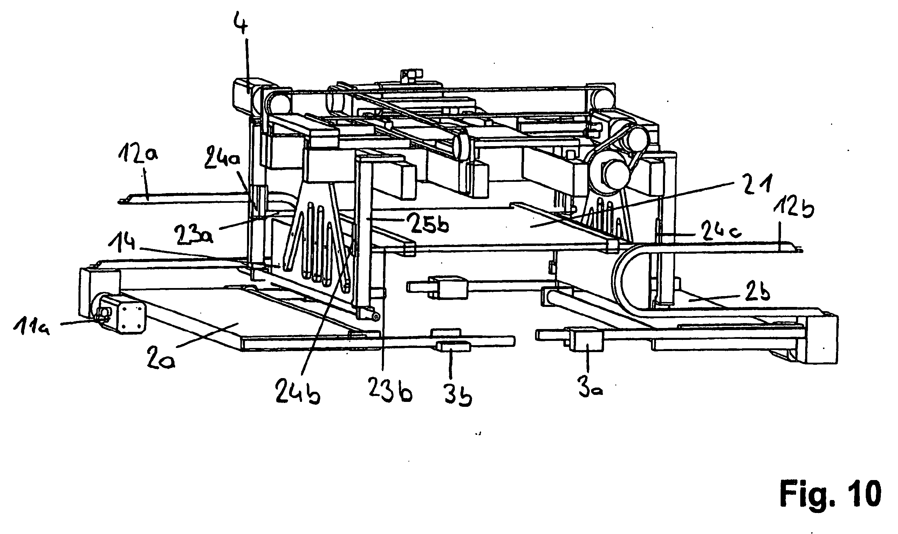

- Fig. 10: die in Fig. 9 gezeigte erfindungsgemäße Vorrichtung in einer entsprechenden Seitenansicht ohne einen in den Innenraum ragenden Gebindestapel; und

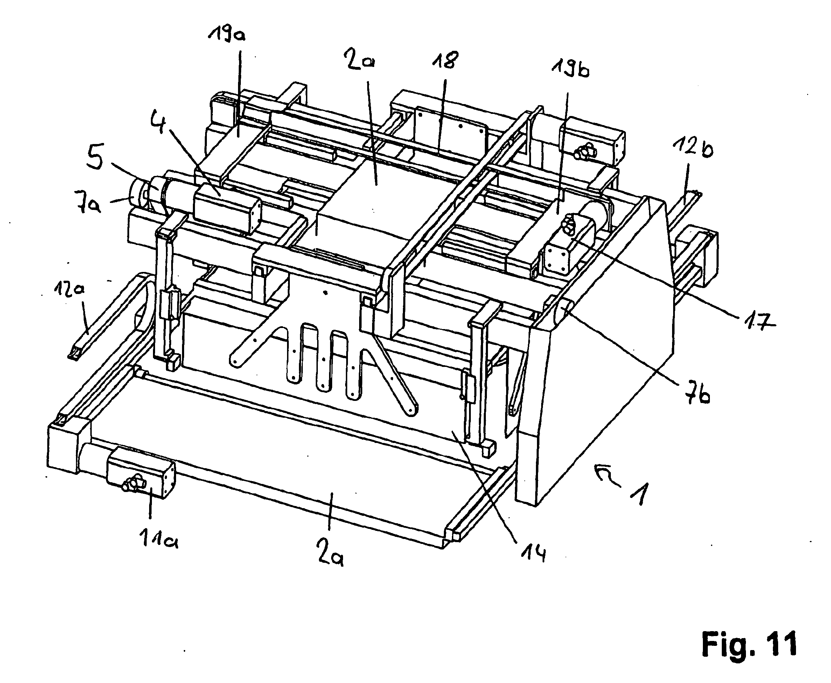

- Fig. 11: eine weitere perspektivische Darstellung der erfindungsgemäßen Vorrichtung von schräg oben.

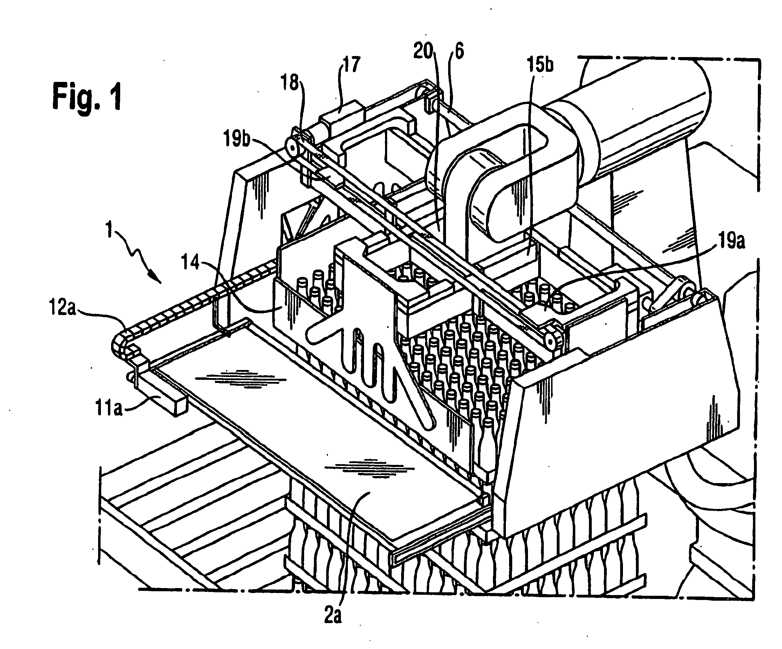

Die Fig. 1 ist eine Übersichtsdarstellung, bei der eine erfindungsgemäße Vorrichtung zum Depalletieren mit einem Roboter verbunden ist, die die oberste Lage eines auf einer Palette befindlichen Gebindestapels umgreift, um diese von dem restlichen Stapel abzuheben.

Die erfindungsgemäße Vorrichtung zum Depalletieren wird im folgenden anhand der weiteren Figuren im einzelnen beschrieben.

Das erfindungsgemäße Depalettierwerkzeug weist einen Grundrahmen 1 auf, an dessen Unterseite zwei Tragbodenteile 2a und 2b, hier als Tragbodenhälften, mittels Schiebelagerungen 3a, 3b aufeinander zu und voneinander weg bewegt werden können. Für ein automatisiertes Bewegen der Tragbodenteile 2a und 2b ist ein gemeinsamer elektrisch antreibbarer Motor 4 vorgesehen, der über einen ersten Zahnriemen 5 eine Verteilerwelle 6 antreibt, welche einen rechten Antriebsriemen 7a und einen linken Antriebsriemen 7b antreibt. Die Antriebsriemen 7a und 7b sind ihrerseits mit einem Mitnehmer 8a und 8b verbunden, die wiederum mit jeweils einer der beiden Tragbodenteile 2a und 2b verbunden sind. Das Bewegen der Tragbodenteile 2a und 2b erfolgt dabei synchron. Es könnten die Tragbodenteile 2a und 2b jedoch auch unabhängig voneinander bewegt werden, wenn zwei unabhängig voneinander ansteuerbare Motoren vorgesehen wären, was jedoch in der realisierten Ausgestaltung nicht der Fall ist. An den inneren einander zugewandten Längskanten der Tragbodenteile 2a und 2b sind jeweils eine Walze 9a und 9b drehbar gelagert. Derartige Walzen können beispielsweise in Form von rotierenden, gummierten Rollen realisiert sein, durch welche eine reibschlüssige Kraftübertragung ermöglicht ist. Jede Walze 9a, 9b ist über einen weiteren Riemen 10a und 10b mit einem zugehörigen Rollenantriebsmotor 11a und 11b verbunden. Die Wellenantriebsmotoren 11a und 11b sind über elektrische Leitungen, die innerhalb von Energieführungsketten 12a und 12b verschleißarm geführt sind, mit einer Antriebssteuerung (nicht dargestellt) verbunden.

Mit der Positionsziffer 13 ist ein fester Anschlag bezeichnet, gegen den die depalettierten Waren entgegen der Bewegungsrichtung der Tragbodenteile 2a und 2b von einem beweglichen Anschlag 14 zusammengeschoben werden. Der bewegliche Anschlag 14 wird mittels zweier druckmittelbeaufschlagter Zylinder 15a und 15b verfahren. Die Zylinder 15a und 15b sind als Druckluftzylinder ausgeführt, die über nicht dargestellte, elektrisch betätigbare Ventile mit Druckluft beaufschlagt werden können.

Rechtwinklig zur Bewegungsrichtung der Tragbodenteile 2a und 2b können die erfassten Waren mittels einer weiteren Zentriereinrichtung, die zwei gegenüberliegende bewegliche Schiebeplatten 16a und 16b aufweisen, senkrecht zur ersten Zentrierrichtung zentriert werden. Die Schiebeplatten 16a und 16b werden gemeinsam und synchron mittels eines Zentriermotors 17 bewegt, der mit einem weiteren Zahnriemen 18 gekoppelt ist, der seinerseits mit zwei Verbindungsstücken 19a und 19b verbunden sind. Jeweils ein Verbindungsstück 19a und 19b ist fest mit einer der Schiebeplatten 16a und 16b verbunden, so dass bei einem Antrieb des Zahnriemens 18 in Abhängigkeit der Drehrichtung des Zentriermotors 17 die beiden Schiebeplatten 16a und 16b synchron aufeinander zu oder voneinander weg bewegt werden.

Die Oberflächen der Tragbodenteile 2a und 2b sind aus gleitfähigen Edelstahlblechen hergestellt. Die Edelstahlbleche sind zur Verringerung der Kontaktfläche mit den aufgestellten Waren noppen- oder rillenartig geprägt oder umgeformt. Alternativ können die Oberflächen der Tragbodenteile 2a und 2b auch mit aktiv antreibbaren Förderbändern oder mit passiven Laufrollen ausgestattet sein.

Für ein Positionieren des Depalettierwerkzeugs in exakter Höhe auf einer Ebene zwischen zwei Lagen von Waren oder Warengebinden sind Lichtschranken als Sensoren vorgesehen, die nicht nur die Grenzebene zwischen zwei Warenlagen, sondern auch einen Zwischenraum zwischen zwei Waren oder Warengebinden in Bewegungsrichtung der Tragbodenteile 2a und 2b in derselben Ebene erkennen können. Dazu können die Sensoren zur Erkennung des Zwischenraums zwischen zwei Waren oder Warengebinden am vorderen Ende der Tragbodenteile 2a und 2b, d.h. in Nähe der Rollenwalzen 9a, 9b angeordnet sein. Diese Sensoren können entweder zusätzlich die Höhe der Lage detektieren oder es können separate Sensoren dazu vorgesehen sein, die beispielsweise an dem Grundrahmen 1 des Depalettierwerkzeugs befestigt sind.

Durch eine an der Oberseite angeordnete Anschlusskupplung 20 ist eine Verbindung der erfindungsgemäßen Vorrichtung mit einem Roboter möglich.

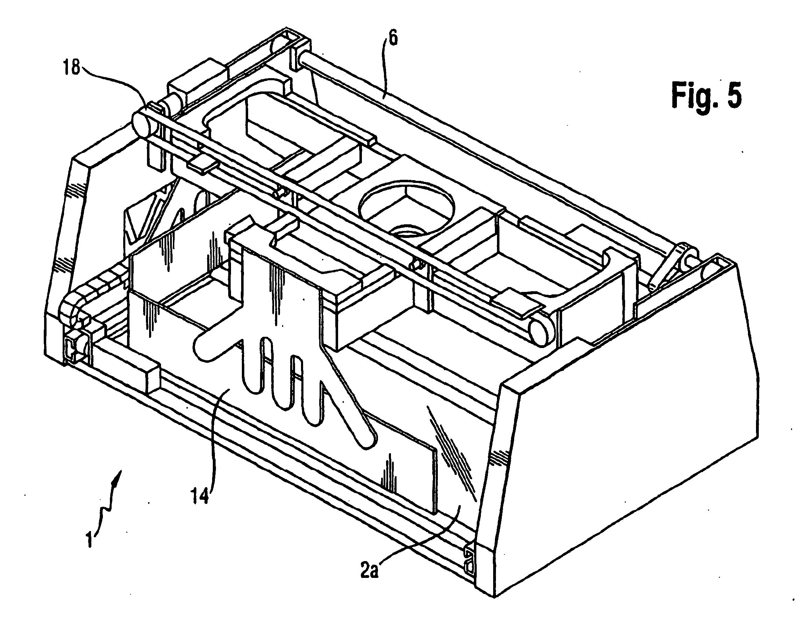

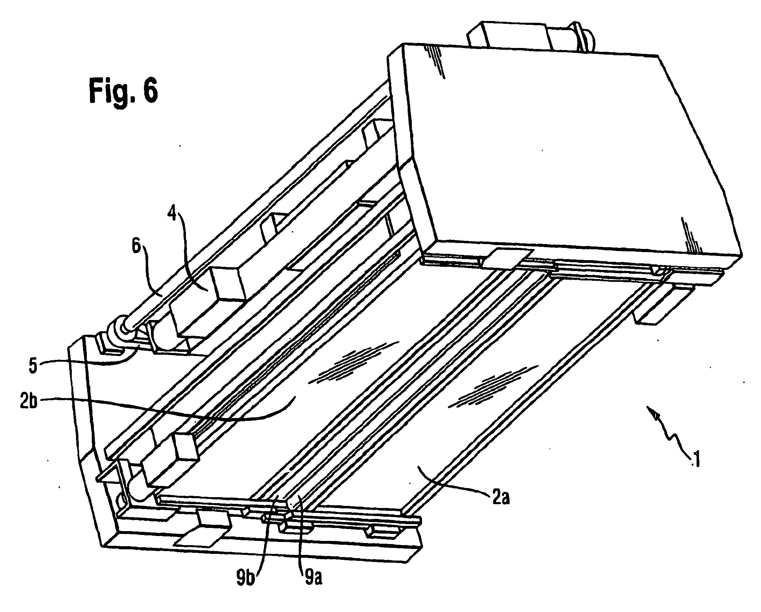

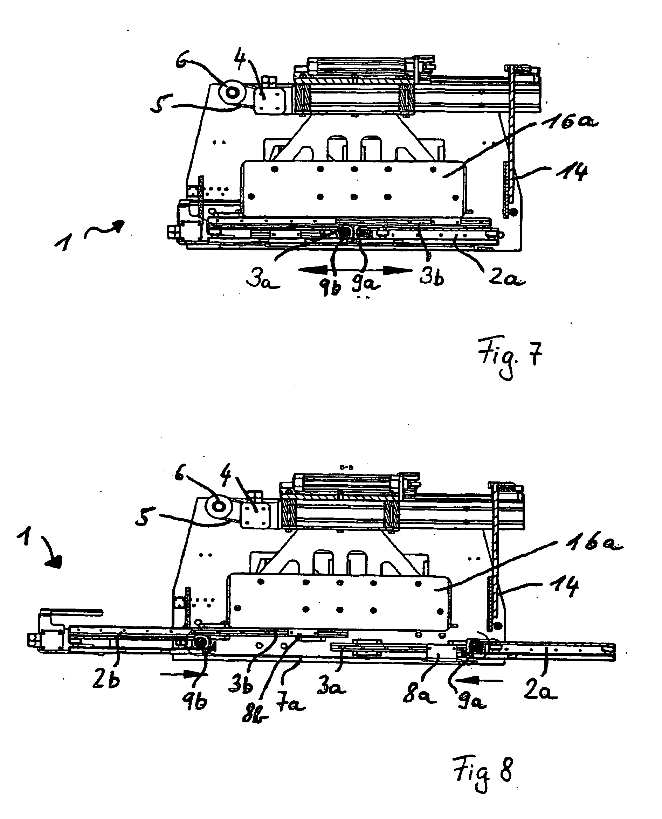

Zum Aufnehmen des obersten Gebindes eines Gebindestapels, wie dies in der Fig. 1 dargestellt ist, senkt der die erfindungsgemäße Vorrichtung tragende Roboter diese über dem Stapel ab, so dass die Walze 9a, 9b im unteren Bereich der obersten Lage oder des oberen Gebindes zu liegen kommen. Sie werden sodann, zusammen mit den Tragplatten 2a, 2b gegen das Gebinde verfahren. Anschließend setzen sie sich gegensinnig in Verbindung und heben kraftschlüssig das Gebinde an, bis dieses mit seiner Unterkante in den oberen Bereich der Walzen 9a, 9b gelangt, woraufhin diese zusammen mit den Tragplatten unter das Gebinde fahren können, wie dies in den Fig. 5, 6 und 7 dargestellt ist. Nachdem das Gebinde zuverlässig durch die Tragplatten 2a, 2b untergriffen ist, kann der Roboter dieses mittels der mit ihm verbundenen erfindungsgemäßen Vorrichtung 1 von dem Stapel abheben und zu einem Ablegeort bewegen.

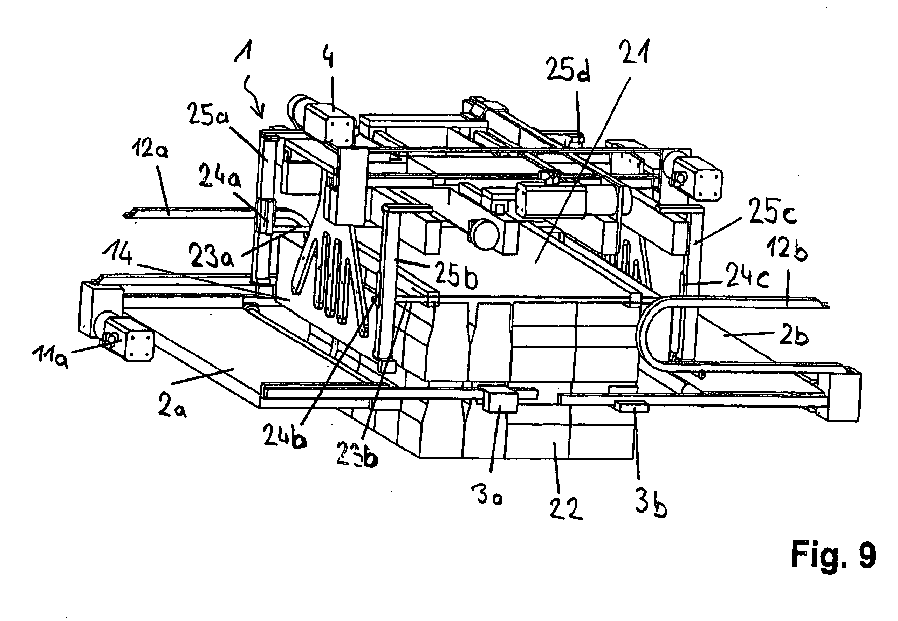

In der in Fig. 9 gezeigten perspektivischen Ansicht einer erfindungsgemäßen Vorrichtung sind Seitenteile des Grundrahmens 1 nicht dargestellt, so dass der Innenbereich einsehbar ist. Dabei befinden sich die Tragbodenteile 2a, 2b in einer nach außen voneinander wegbewegten Position, so dass die Aufnahme eines Gebindestapels 22 möglich ist, der in den Innenraum der Vorrichtung hineinragt.

Auf der Oberseite des Gebindestapels 22 ist ein plattenförmiger Niederhalter 21 angeordnet, der sich flexibel an die Oberfläche des Gebindes anpasst und durch welchen ein Verrutschen bzw. Verkanten von an der Oberseite lose positionierten Objekten, wie Deckel oder Decklagen zuverlässig vermieden wird. Der Niederhalter 21 weist eine rechteckige Form auf, die im Wesentlichen der Grundfläche entspricht, die durch die Tragbodenteile 2a, 2b in zusammengefahrenem Zustand gebildet ist. Derart ist ein vollständiges Abdecken der Oberseite der jeweiligen aufgenommenen Gebindelage möglich.

An den vier Ecken des Niederhalters 21 befindet sich jeweils ein Haltebügel 23a, 23b, 23c, 23d, über welchen der Niederhalter 21 mittels jeweils einer Befestigung 24a, 24b, 24c, 24d an jeweils eine von vier Linearführungen 25a, 25b, 25c, 25d gekoppelt ist. Die Linearführungen 25a, 25b, 25c, 25d sind im Wesentlichen durch an den jeweiligen Seitenkanten der erfindungsgemäßen Vorrichtung angeordnete, sich senkrecht zur Oberfläche des Niederhalters erstreckende Schienen gebildet. Derart ist ein stufenloses, elektrisch oder pneumatisch angetriebenes Senken bzw. Heben des Niederhalters 21 auf bzw. von der Oberseite des Gebindestapels möglich. Der Einsatz des Niederhalters 21 kann dabei bedarfsmäßig erfolgen. Beispielsweise kann ein Absenken des Niederhalters 21 auf die Oberseite des Gebindestapels 22 nur dann vorgesehen sein, falls loses Material vorhanden ist, durch welches der Be- bzw. Entladevorgang beeinflusst oder gestört werden könnte.

Unter der Voraussetzung, dass der Niederhalter beim Be- bzw. Entladevorgang benötigt wird, wird die erfindungsgemäße Vorrichtung über die oberste Gebindelage positioniert. Im nächsten Schritt erfolgt ein Herabsenken des Niederhalters 21 auf die Oberseite der Gebindeeinheit 22. Im darauffolgenden Schritt erfolgt ein Anheben der obersten Gebindelage durch die Walzen 9a, 9b in der vorstehend beschriebenen Weise, so dass ein Unterfahren der Gebinde durch die Tragplatten 2a, 2b möglich ist. Während dieses Schritts werden lose positionierte Objekte, wie Deckel oder Decklagen, durch den an der Oberseite positionierten Niederhalter fixiert bzw. in ihrer Stellung gehalten.

Im folgenden Schritt erfolgt ein Aufnehmen der Lage in der erfindungsgemäßen Vorrichtung durch den Roboter, welcher wiederum ein Umpositionieren derselben beispielsweise auf eine andere Palette oder einen Abreihtisch vornimmt. Auch während des Schritts des Abgebens der Gebindelage bleibt der Niederhalter in Position auf der Oberseite der Gebindelage und fährt erst nach dem Abgabevorgang der Gebindelage wieder in seine obere Ausgangsposition zurück.

### Bezugszeichenliste

- 1: Grundrahmen
- 2a, 2b: Tragbodenteile
- 3a, 3b: Schiebelagerungen
- 4: Motor
- 5: Zahnriemen
- 6: Verteilerwelle
- 7a, 7b: Antriebsriemen
- 8a, 8b: Mitnehmer
- 9a, 9b: Walze
- 10a, 10b: Riemen
- 11a, 11b: Rollenantriebsmotor
- 12a, 12b: Energieführungsketten
- 13: fester Anschlag
- 14: beweglicher Anschlag
- 15a, 15b: Zylinder
- 16a, 16b: Schiebeplatte
- 17: Zentriermotor
- 18: Zahnriemen
- 19a, 19b: Verbindungsstücke
- 20: Anschlusskupplung
- 21: Niederhalter
- 22: Gebindestapel
- 23a, 23b,23c, 23d: Haltebügel
- 24a, 24b 24c, 24d: Befestigung
- 25a, 25b 25c, 25d: Linearführung

## Patentansprüche

1. Verfahren zum Entpalletieren von gestapelten Gebinden mittels einer Vorrichtung nach Anspruch 3, wobei Gebinde reibschlüssig angehoben und durch mindestens einen Tragboden unterfahren werden, wobei die Gebinde an zwei einander gegenüberliegenden Seiten in Parallelausrichtung zu Gebindelagen, insbesondere senkrecht, angehoben werden, indem Walzen an den einander gegenüberliegenden Seiten reibschlüssig angreifen, wobei die angehobenen Gebinde von zwei gegenüberliegenden Seiten aus von zwei Tragbodenteilen des Tragbodens unterfahren werden, und wobei zum Aufnehmen eines obersten Gebindes eines Gebindestapels ein die Vorrichtung tragender Roboter diese über dem Stapel absenkt, so dass die Walzen im unteren Bereich der obersten Lage oder des obersten Gebindes zu liegen kommen, die Walzen sodann zusammen mit den Tragbodenteilen gegen das Gebinde verfahren werden, sich anschließend gegensinnig in Bewegung setzen und das Gebinde kraftschlüssig anheben, bis dieses mit seiner Unterkante in den oberen Bereich der Walzen gelangt, woraufhin diese zusammen mit den Tragbodenteilen unter das Gebinde fahren, und der Roboter das durch die Tragbodenteile untergriffene Gebinde mittels der mit ihm verbundenen Vorrichtung von dem Stapel abhebt und zu einem Ablegeort bewegt.

2. Verfahren nach Anspruch 1, **dadurch gekennzeichnet, dass** mindestens ein Niederhalter (21) auf die Oberseite der Gebinde (22) einwirkt.

3. Vorrichtung zum Entpalletieren von gestapelten Gebinden, mit mindestens einer Walze zum Anheben der Gebinde und mit einem Tragboden, **dadurch gekennzeichnet, dass** der Tragboden mindestens zwei gegeneinander verfahrbare Tragbodenteile (2a, 2b) aufweist, wobei an inneren, einander zugewandten Längskanten der Tragbodenteile einander gegenüberliegende Walzen (9a, 9b) drehbar gelagert sind, um Gebinde in Parallelausrichtung zu Gebindelagen, insbesondere senkrecht, reibschlüssig anzuheben, und dass die Vorrichtung eine Anschlusskupplung (20) zur Verbindung der Vorrichtung mit einem Roboter aufweist, wobei die Walzen (9a, 9b) durch mindestens einen Walzenantriebsmotor (11a, 11b) antreibbar sind.

4. Vorrichtung nach Anspruch 3, **dadurch gekennzeichnet, dass** die Walzen über Riemen (10a, 10b) vom mindestens einem Walzenmotor (11a, 11b) her antreibbar sind.

5. Vorrichtung nach einem der Ansprüche 3 bis 4, **dadurch gekennzeichnet, dass** die Tragbodenteile (2a, 2b) über Mitnehmer (8a, 8b) verschiebbar sind.

6. Vorrichtung nach einem der Ansprüche 3 bis 5, **dadurch gekennzeichnet, dass** die Tragbodenteile (2a, 2b) mittels Antriebsriemen (7a, 7b), ggf. über die Mitnehmer (8, 8a) verschiebbar sind.

7. Vorrichtung nach einem der Ansprüche 3 bis 6, **dadurch gekennzeichnet, dass** die Tragbodenteile (2a, 2b) über mindestens eine Verteilerwelle (6) verschiebbar sind.

8. Vorrichtung nach Anspruch 7, **dadurch gekennzeichnet, dass** die Verteilerwelle (6) von einem mindestens einen Motor (4) über mindestens einen Zahnriemen (5) antreibbar ist.

9. Vorrichtung nach einem der Ansprüche 3 bis 8, **gekennzeichnet durch** einen festen Anschlag (13) und einen gegenüber diesem beweglichen Anschlag (14) zur Positionierung der Gebinde.

10. Vorrichtung nach Anspruch 9, **dadurch gekennzeichnet, dass** der bewegliche Anschlag (14) mittels mindestens eines Zylinders, vorzugsweise als Druckluftzylinder, verschiebbar ist.

11. Vorrichtung nach einem der Ansprüche 3 bis 9, **gekennzeichnet durch** mindestens eine parallel zur Erstrekkungsrichtung von zwei Walzen (9a, 9b) verschiebbaren Schieberplatte (16a, 16b) zur Zentrierung der Gebinde.

12. Vorrichtung nach Anspruch 11, **gekennzeichnet durch** zwei gegeneinander verschiebbare Schiebeplatten (16a, 16b).

13. Vorrichtung nach Anspruch 12, **dadurch gekennzeichnet, dass** die Schiebeplatten (16a, 16b) durch mindestens einen Zentriermotor, vorzugsweise über Zahnriemen verschiebbar sind.

14. Vorrichtung nach Anspruch 3, **dadurch gekennzeichnet, dass** die Schiebplatten (16a, 16b) synchron bewegbar sind.

15. Vorrichtung nach einem der Ansprüche 3 bis 14, **gekennzeichnet durch** einen Niederhalter (21), der auf der Oberseite der Gebinde (22) angeordnet ist.

16. Vorrichtung nach Anspruch 15, **dadurch gekennzeichnet, dass** der Niederhalter (21) im Wesentlichen plattenförmig ausgebildet ist.

17. Vorrichtung nach Anspruch 15 oder 16, **dadurch gekennzeichnet, dass** der Niederhalter (21) derart flexibel ausgebildet ist, dass er im Wesentlichen an die Oberflächenform der Gebinde (22) anpassbar ist.

18. Vorrichtung nach Anspruch 17, **dadurch gekennzeichnet, dass** der Niederhalter (21) aus kettenförmigem Material, insbesondere Schamierband-Ketten aus Kunststoff oder Metall, gebildet ist.

19. Vorrichtung nach Anspruch 17, **dadurch gekennzeichnet, dass** der Niederhalter (21) aus teppichförmig geflochtenem Material, insbesondere Draht oder Stoff, gebildet ist.

20. Vorrichtung nach Anspruch 15 oder 16, **dadurch gekennzeichnet, dass** der Niederhalter (21) starr ausgebildet ist.

21. Vorrichtung nach einem der Ansprüche 15 bis 20, **dadurch gekennzeichnet, dass** der Niederhalter (21) von einer oberen Position in eine untere Position vertikal verfahrbar ist.

22. Vorrichtung nach Anspruch 21, **dadurch gekennzeichnet, dass** der Niederhalter (21) stufenlos verfahrbar ist.

23. Vorrichtung nach Anspruch 21 oder 22, **dadurch gekennzeichnet, dass** die untere Position derjenigen Position entspricht, bei welcher der Niederhalter (21) mit der Oberfläche der Gebindeoberseite (22) in reibschlüssigen Kontakt tritt.

24. Vorrichtung nach einem der Ansprüche 21 bis 23, **dadurch gekennzeichnet, dass** der Niederhalter (21) pneumatisch und/oder motorisch verfahrbar ist.

25. Vorrichtung nach einem der Ansprüche 15 bis 24, **dadurch gekennzeichnet, dass** der Niederhalter (21) zum Abdecken der gesamten Oberseite der Gebinde (22) ausgebildet ist.

## Claims

1. A method of depalletising stacked packages by means of a device according to claim 3, packages being lifted by frictional engagement and having at least one support plate passed underneath them, wherein the packages are lifted, in particular vertically, at two mutually opposing sides in parallel alignment to package layers by rollers frictionally engaging at the mutually opposing sides, wherein the lifted packages are passed underneath from two opposing sides by two support plate parts of the support plate, and wherein for picking up a topmost package of a package stack, a the device carrying robot lowers said device over the stack so that the rollers come to rest in the bottom area of the upmost layer or of the upmost package, so that then the rollers are displaced together with the support plate parts towards the package, subsequently start to move in opposite direction and force-fittingly lift the package until said package arrives with its bottom edge in the upper region of the rollers, whereupon said rollers together with the support plate parts move underneath the package, and the robot lifts the package from the stack supported by the support plate parts by means of the device carried by the robot and moves it to a storage location.

2. A method according to claim 1, **characterised in that** at least one hold-down member (21) acts on the top of the packages (22).

3. A device for depalletising stacked packages, having at least one roller for lifting the packages, and having a support plate, **characterized in that** the support plate has at least two support plate parts (2a, 2b) displaceable towards one another, wherein at inner, mutually facing longitudinal edges of the support plate parts mutually opposing rollers (9a, 9b) are rotatably mounted to, in particular vertically, lift by frictional engagement packages in parallel alignment to stacked packages, and that the device has a connecting coupling (20) for connecting the device to a robot, wherein the rollers (9a, 9b) are drivable by at least one roller drive motor (11a, 11b).

4. A device according to claim 3, **characterised in that** the rollers may be driven via belts (10a, 10b) from the at least one roller motor (11a, 11b).

5. A device according to claim 3 or claim 4, **characterised in that** the support plate parts (2a, 2b) are displaceable by means of drivers (8a, 8b).

6. A device according to any one of claims 3 to 5, **characterised in that** the support plate parts (2a, 2b) may be displaced by means of drive belts (7a, 7b), optionally via the drivers (8, 8a).

7. A device according to one of claims 3 to 6, **characterised in that** the support plate parts (2a, 2b) may be displaced by means of at least one distributor shaft (6).

8. A device according to claim 7, **characterised in that** the distributor shaft (6) may be driven by at least one motor (4) via at least one toothed belt (5).

9. A device according to any one of claims 3 to 8, **characterised by** a fixed limit stop (13) and a limit stop (14) movable relative thereto for positioning the package.

10. A device according to claim 9, **characterised in that** the movable limit stop (14) is displaceable by means of at least one cylinder, preferably in the form of a pneumatic cylinder.

11. A device according to any one of claims 3 to 9, **characterised by** at least one sliding plate (16a, 16b) displaceable parallel to the direction of extension of two rollers (9a, 9b), for centring the packages.

12. A device according to claim 11, **characterised by** two sliding plates (16a, 16b) displaceable towards one another.

13. A device according to claim 12, **characterised in that** the sliding plates (16a, 16b) are displaceable by at least one centring motor, preferably via toothed belts.

14. A device according to claim 3, **characterised in that** the sliding plates (16a, 16b) are movable synchronously.

15. A device according to any one of claims 3 to 14, **characterised by** a hold-down member (21), which is arranged on the top of the packages (22).

16. A device according to claim 15, **characterised in that** the hold-down member (21) is of substantially plate-shaped construction.

17. A device according to claim 15 or claim 16, **characterised in that** the hold-down member (21) is constructed flexibly such that it may be adapted substantially to the shape of the surface of the packages (22).

18. A device according to claim 17, **characterised in that** the hold-down member (21) is made of chain-like material, in particular flat-top chains of plastics or metal.

19. A device according to claim 17, **characterised in that** the hold-down member (21) is made of material braided in the manner of a carpet, in particular of wire or cloth.

20. A device according to claim 15 or claim 16, **characterised in that** the hold-down member (21) is of rigid construction.

21. A device according to any one of claims 15 to 20, **characterised in that** the hold-down member (21) may be displaced vertically from an upper position into a lower position.

22. A device according to claim 21, **characterised in that** the hold-down member (21) may be continuously displaced.

23. A device according to claim 21 or claim 22, **characterised in that** the lower position corresponds to that position in which the hold-down member (21) is in frictional contact with the surface of the top of the packages (22).

24. A device according to any one of claims 21 to 23, **characterised in that** the hold-down member (21) may be displaced pneumatically and/or by motor.

25. A device according to any one of claims 15 to 24, **characterised in that** the hold-down member (21) is constructed to cover the entire top of the packages (22).

## Revendications

1. Procédé pour dépaléttiser des emballages secondaires empilés au moyen d'un dispositif selon la revendication 3, dans lequel des emballages secondaires sont soulevés par friction et au moins un plateau de support est amené sous ceux-ci, dans lequel les emballages secondaires sont soulevés par deux côtés situés en vis-à-vis l'un de l'autre selon une orientation parallèle aux couches d'emballages, en particulier perpendiculairement, en ce que des rouleaux sont en prise par friction au niveau des côtés situés en vis-à-vis, dans lequel deux parties de plateau de support du plateau de support sont amenées par deux côtés situés en vis-à-vis sous les emballages secondaires soulevés, et dans lequel, pour prélever un emballage secondaire supérieur d'une pile d'emballages secondaires, un robot portant le dispositif abaissant ce dernier sur la pile de manière à ce que les rouleaux arrivent à reposer dans la partie inférieure de la couche supérieure ou de l'emballage secondaire supérieur, les rouleaux étant alors déplacés ensemble avec les parties de plateau de support contre l'emballage, se mettant ensuite en mouvement en sens contraire et soulevant l'emballage secondaire par force jusqu'à ce que celui-ci arrive avec son bord inférieur dans la zone supérieure des rouleaux, après quoi ceux-ci passent ensemble avec les parties de plateau de support sous l'emballage secondaire et le robot soulevant l'emballage secondaire saisi par le dessous grâce aux parties de plateau de support au moyen du dispositif qui est relié à lui, et le déplaçant vers un emplacement de dépôt.

2. Procédé selon la revendication 1, **caractérisé en ce qu'**au moins un serre-flan (21) exerce une pression sur la face supérieure du lot (22).

3. Dispositif pour dépaléttiser des emballages secondaires empilés, avec au moins un rouleau pour soulever les emballages secondaires et avec un plateau de support,
**caractérisé en ce que** le plateau de support présente au moins deux parties de plateau de support (2a, 2b) déplaçables l'une par rapport à l'autre, dans lequel des rouleaux (9a, 9b) situés en vis-à-vis l'un de l'autre sont montés de manière rotative sur des bords longitudinaux intérieurs tournés l'un vers l'autre des parties de plateau de support pour soulever par friction des emballages secondaires selon une orientation parallèle aux couches d'emballages secondaires, en particulier perpendiculairement, et **en ce que** le dispositif présente un dispositif d'accouplement de raccordement (20) pour relier le dispositif à un robot, dans lequel les rouleaux (9a, 9b) peuvent être entraînés par au moins un moteur d'entraînement de rouleaux (11a, 11b).

4. Dispositif selon la revendication 3, **caractérisé en ce que** les rouleaux peuvent être entraînés au-dessus des courroies (10a, 9b) par au moins un monteur (11a, 11b).

5. Dispositif selon une des revendications 3 à 4, **caractérisé en ce que** les deux parties du plateau porteur (2a, 2b) peuvent se déplacer sous l'action de tocs d'entraînement (8a, 8b).

6. Dispositif selon une des revendications 3 à 5, **caractérisé en ce que** les deux parties du plateau porteur (2a, 2b) peuvent se déplacer au moyen de courroies d'entraînement (7a, 7b), le cas échéant par l'intermédiaire de tocs d'entraînement (8, 8a).

7. Dispositif selon une des revendications 3 à 6, **caractérisé en ce que** les deux parties du plateau porteur (2a, 2b) peuvent se déplacer par l'intermédiaire d'au moins un arbre distributeur (6).

8. Dispositif selon la revendication 7, **caractérisé en ce que** l'arbre distributeur (6) peut être entraîné par au moins un moteur (4) par l'intermédiaire d'au moins une courroie crantée (5).

9. Dispositif selon une des revendications 3 à 8, **caractérisé par** une butée fixe (13) et une butée mobile (14) placée en face pour positionner le lot.

10. Dispositif selon la revendication 9, **caractérisé en ce que** la butée mobile (14) se déplace sous l'effet d'au moins un vérin, de préférence un vérin à air comprimé.

11. Dispositif selon une des revendications 3 à 9, **caractérisé par** au moins une plaque coulissante (16a, 16b) se déplaçant parallèlement au sens de l'étendue sous l'effet de deux rouleaux (9a, 9b) pour centrer les lots.

12. Dispositif selon la revendication 11, **caractérisé par** deux plaques coulissantes (16a, 16b) se déplaçant l'une vers l'autre.

13. Dispositif selon la revendication 12, **caractérisé en ce que** les plaques coulissantes (16a, 16b) peuvent être déplacées par au moins un moteur de centrage, de préférence par l'intermédiaire de courroies crantées.

14. Dispositif selon la revendication 3, **caractérisé en ce que** les plaques coulissantes (16a, 16b) peuvent être déplacées de manière synchrone.

15. Dispositif selon une des revendications 3 à 14, **caractérisé par** un serre-flan (21) disposé sur la face supérieure du lot (22).

16. Dispositif selon la revendication 15, **caractérisé en ce que** le serre-flan (21) est de forme essentiellement plane.

17. Dispositif selon une des revendications 15 ou 16, **caractérisé en ce que** le serre-flan (21) est suffisamment flexible pour pouvoir épouser pour l'essentiel la forme de la surface des lots (22).

18. Dispositif selon la revendication 17, **caractérisé en ce que** le serre-flan (21) est formé d'un matériel chaîné, singulièrement de chaînes plates à charnières en plastique ou en métal.

19. Dispositif selon la revendication 17, **caractérisé en ce que** le serre-flan (21) est formé d'un matériel tressé sous forme de tapis, singulièrement du fil métallique ou de l'étoffe.

20. Dispositif selon une des revendications 15 ou 16, **caractérisé en ce que** le serre-flan (21) est réalisé de façon rigide.

21. Dispositif selon une des revendications 15 à 20, **caractérisé en ce que** le serre-flan (21) peut être déplacé verticalement d'une position supérieure à une position inférieure.

22. Dispositif selon la revendication 21, **caractérisé en ce que** le serre-flan (21) peut être déplacé en continu.

23. Dispositif selon une des revendications 21 ou 22, **caractérisé en ce que** la position inférieure correspond à la position dans laquelle le serre-flan (21) entre en contact par adhérence avec la surface de la face supérieure du lot (22).

24. Dispositif selon une des revendications 21 à 23, **caractérisé en ce que** le serre-flan (21) peut être déplacé par action pneumatique et/ou sous l'laction d'un monteur.

25. Dispositif selon une des revendications 15 à 24, **caractérisé en ce que** le serre-flan (21) est formé pour couvrir sur la face supérieure totale du lot (22).
